# EUROPEAN PATENT APPLICATION

(11) **EP 2 844 028 A1**
(43) Date of publication of application: **04.03.2015**
(21) Application number: 13360025.4
(22) Date of filing: 02.09.2013
(51) Int. Cl.: H04W 88/08

(54) **Configuring a parallel communications link**

(71) Applicant: ALCATEL LUCENT, 92100 Boulogne-Billancourt (FR)
(72) Inventor: Pierrard, Arnaud, 91620 Nozay (FR); Klein, Olivier, 91620 Nozay (FR)
(74) Representative: Greenwood, Matthew David

(57) **Abstract**

A method, in a distributed radio base station comprising a first distributed portion of the radio base station, a second distributed portion of the radio base station, and a parallel communications link connecting the first distributed portion and the second distributed portion, for configuring the link, comprising establishing the link between the first and second distributed portions using a predefined line rate negotiated between the portions, transmitting a request from the first distributed portion to the second distributed portion for a custom parallel communications link between the two portions, receiving, at the first distributed portion, acknowledgement of the request for the custom parallel communications link from the second distributed portion.

## Description

### TECHNICAL FIELD

The present invention relates generally to radio access networks involved in wireless telecommunications, and more particularly to radio access networks using an internal parallel communications link (such as the Common Public Radio Interface (CPRI)) of a distributed radio base station which serves to link a radio equipment portion of the radio base station to a radio equipment control portion of the distributed radio base station.

### BACKGROUND

In a typical cellular radio system, wireless user equipment (UE) communicates via a radio access network (RAN) to one or more core networks. The user equipment can be mobile stations such as mobile telephones ("cellular" telephones) and laptops with mobile termination, and thus can be, for example, portable, pocket, hand-held, computer-included, or car-mounted mobile devices which communicate voice and/or data with radio access network. Alternatively, UE can be fixed wireless devices, such as fixed cellular devices/terminals which are part of a wireless local loop or the like for example.

The RAN covers a geographical area which is divided into cell areas, with each cell area being served by a radio base station to provide radio coverage by the radio equipment at a base station site. A radio base station can be configured with a distributed architecture. For example, a distributed radio base station can take the form of one or more radio equipment (RE) portions that are linked to a radio equipment control (REC) portion over a radio base station internal interface.

One example of an internal interface of a radio base station which can link a RE portion of the radio base station to a REC portion of the base station is the CPRI, which standardises the protocol interface between the REC and the RE in wireless base stations. CPRI allows the use of a distributed architecture where base stations, containing the REC, are connected to remote radio heads via lossless fibre links that carry the CPRI data for example. A CPRI architecture reduces costs for service providers because only the remote radio heads containing the RE need to be situated in environmentally challenging locations. The base stations can be centrally located in less challenging locations where footprint, climate, and availability of power are more easily managed. However, the interface link is typically inflexible, and certain characteristics cannot therefore be suitably matched or selected for given situations.

### SUMMARY

According to an example, there is provided a method, in a distributed radio base station comprising a first distributed portion of the radio base station, a second distributed portion of the radio base station, and a parallel communications link connecting the first distributed portion and the second distributed portion, for configuring the link, comprising establishing the link between the first and second distributed portions using a predefined line rate negotiated between the portions, transmitting a request from the first distributed portion to the second distributed portion for a custom parallel communications link between the two portions, receiving, at the first distributed portion, acknowledgement of the request for the custom parallel communications link from the second distributed portion. The custom parallel communications link can use a custom line rate. The custom parallel communications link can use a custom frame structure, whether or not a custom line rate is in use. The parallel communications link between the first and second distributed portions can be established using the custom line rate. The method can further include determining whether a custom line rate for the link between the first and second distributed portion is supported. The line rate of the link can revert to the predefined rate in the event that a custom line rate is not supported or available. The custom line rate can include a custom control word size determined on the basis of desired communications link parameters. The first distributed portion can be a radio equipment controller, and the second distributed portion can be radio equipment for the base station.

According to an example, there is provided a radio equipment controller (REC), configured to establish a parallel communications link to radio equipment (RE) using a predefined line rate negotiated between the REC and the RE, transmit a request to the RE for a custom parallel communications link, receive an acknowledgement of the request for the custom link from the RE. The custom parallel communications link to the RE can be established using a custom line rate. The custom parallel communications link to the RE can be established using a custom frame structure, whether or not a custom line rate is in use. The controller can determine whether a custom line rate for the link to the RE is supported.

According to an example, there is provided a parallel communications link between first and second distributed portions of a radio base station, established to use a custom line rate determined on the basis of a control word size relating to desired link parameters.

According to an example, there is provided a parallel communications link between first and second distributed portions of a radio base station, established to use a custom frame structure.

According to an example, there is provided a computer program product, comprising a computer usable medium having computer readable program code embodied therein, said computer readable program code adapted to be executed to implement a method, in a distributed radio base station comprising a first distributed portion of the radio base station, a second distributed portion of the radio base station, and a parallel communications link connecting the first distributed portion and the second distributed portion, for configuring the link as provided above.

### BRIEF DESCRIPTION OF THE FIGURES

Embodiments will now be described, by way of example only, with reference to the accompanying drawings, in which:
Figure 1 is a schematic representation of an example of a common public radio interface between a REC and a RE according to an example;
Figures 2a is a schematic representation of a frame structure for a link; and
Figure 2b is a schematic representation of a frame structure according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In a flexible radio base station system architecture involving remote radio equipment there can be a decomposition of the radio base station into two elements: the REC and the RE itself. Both parts may be physically separated. For example, the RE may be close to an antenna, whereas the REC can be located in a conveniently accessible site. Alternatively, both may be co-located as in a conventional radio base station design. The REC contains the radio functions of the digital baseband domain, whereas the RE contains the analogue radio frequency functions. The functional split between both parts enables the definition of a generic interface based on In-Phase and Quadrature (IQ) data.

Thus, a distributed radio base station can comprise a first distributed portion, such as the REC of the radio base station, and a second distributed portion such as the RE. A parallel communications link connecting the portions, such as a CPRI link can be provided. According to an example, characteristics of the link can be negotiated and configured so that a customised link is provided, as opposed to the legacy case in which freedom for selecting a link line rate is provided only between preconfigured options. A link between the first and second distributed portions is first established using a predefined line rate negotiated between the portions, which can be reverted to in the event that portions are not capable of supporting a customised configuration, thereby the avoiding any issues that may result in a dropped call for example.

If the REC and the RE support a custom link, such as a custom line rate and/or frame structure for example, a set of new agreed parameters for the link can be negotiated. For example, a new set of the parameters Y, W (as described further below) and line coding (which could be 66/64 line coding inherited from IEEE or 67/64 line coding for example) can be negotiated.

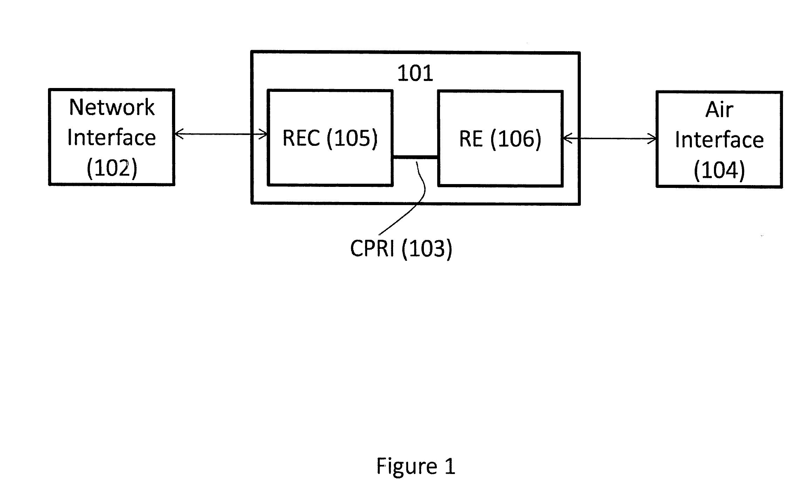

Figure 1 is a schematic representation of a common public radio interface between a REC and a RE according to an example. A radio base station system 101 includes a REC 105 (first distributed portion) and a RE 106 (second distributed portion). REC 105 is linked outside of the system 101 by a network interface 102, and RE 106 includes an air interface 104. The REC 105 and RE 106 are linked by a parallel communications link, such as CPRI 103. The basic configuration of figure 1 can be extended in various ways. For example, instead of a single interface, multiple CPRI interfaces between components of the system can be used. Furthermore, multiple REs and/or RECs can be provided and linked in various ways, such as using star, ring or chain topologies for example.

CPRI is specified for several applications with different interface line bit rates. The line rates are defined depending on the interface release and hence do not necessarily provide the optimal line rate to suit the wireless architecture in question. There are seven predefined line bit rates, which are integer multiples of 614.4 Mbit/s, and each REC and RE of a system support at least one of these CPRI line bit rates.

The basic frame structure for CPRI line bit rates consists of 16 words with index W=0...15. The word with the index W=0 (1/16 of the basic frame) is used for one control word. The length T of the word depends on the CPRI line bit rate. Each bit within a word is addressed with the index B, where B=0 is the LSB and B=T-1 is the MSB. Each BYTE within a word is addressed with the index Y, where B=0 is LSB of Y=0, B=7 is MSB of Y=0, B=8 is LSB of Y=1, and so on.

According to an example, a custom line bit rate can be configured, and/or custom line coding and frame structures can be provided. Line rate or frame structure can be configured via a vendor specific control word for example. The CPRI performs line rate negotiation as defined in the CPRI standard to ensure backward compatibility. However, once a link is established on an official CPRI line rate (backward CPRI compatible) a REC can check whether a CPRI device is compliant with custom line rate negotiation (feature compatible checking) via Vendor specific means for example (Vendor Specific Control words), and can then provide the CPRI line configuration (word size in Bytes), Number of Words and line coding (8B/10B, 64B/66B or any line coding).

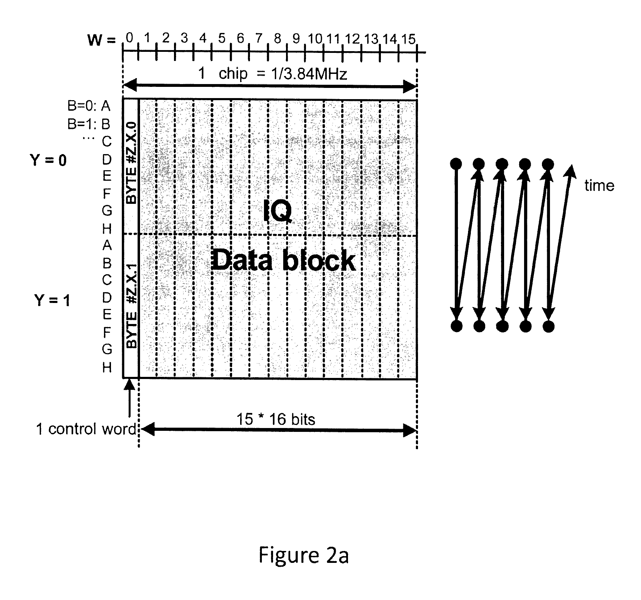

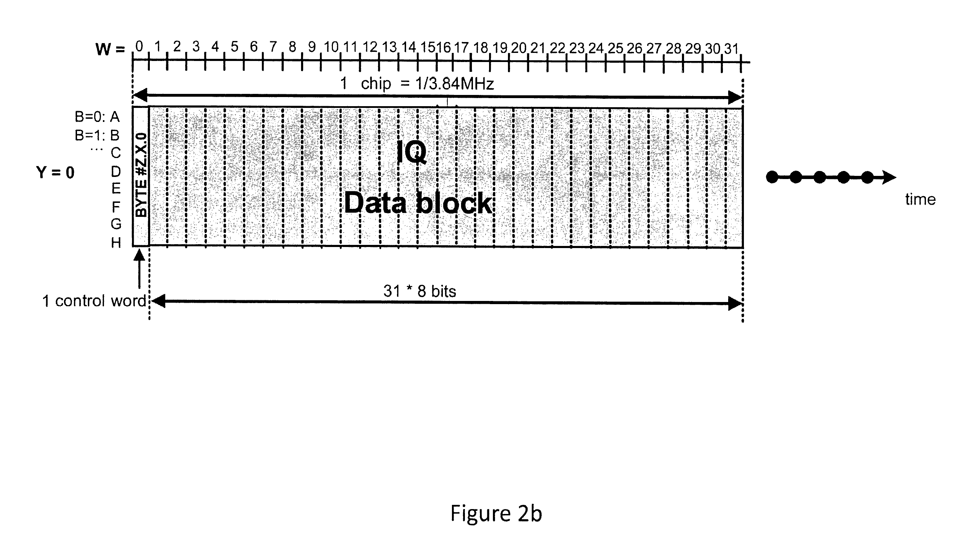

Figures 2a and 2b are schematic representations of two different frame structures with the same line bit rate. Figure 2a is a schematic representation of a CPRI frame with one control word of 2x8 bits and an IQ data block of 15 x 16 bits. Figure 2b is a schematic representation a negotiated frame structure according to an example, which results in the same line bit rate as that shown in figure 2a, but which has a control word of 1x8 bits and an custom IQ data block of 31 x 8 bits.

Accordingly, as the same line coding is used for these 2 frame structures, the line bit rate is the same in both cases, but the ratio between the IQ data block and the control word part is not the same: 1/15 versus 1/31. Therefore, according to an example, a parallel communications line between components in a distributed base station system can be configured by negotiating custom values for any one or more of the number of W, the number of Y or the line coding. That is, a custom frame structure can be negotiated that can provide a custom line rate for the link, if desired.

An exemplary process for custom line rate configuration the case of a 4G CPRI link in 2*2 MiMo is as follows.

Initially, the REC and RE perform a typical line rate negotiation for a CPRI link. For example the REC and RE connect in CPRI rate 2 (1.2288 Gb.s-1 and using Fast Ethernet C&M with p=62). Once this CPRI link has been established, the REC and RE can exchange their capabilities for custom line rate or frame structure support. The REC can then request a custom line rate with a new (Word Size, number of Word per basic frame and line Coding) for example.

For example to provide a CPRI link for LTE 20MHz on 3 sectors in 2*2 MiMo requires 15 bits * 2 (I&Q signals) * 8 (oversampling ratio for LTE 20 MHz) * 3 (sectors) * 2 (MiMo 2*2) = 1440 bits per basic frame. This results in a control word size of 1440 /15 (keeping 16 Words per basic frame) => 96 bits =>12 Bytes. There is no existing CPRI line rate which provides a control word size of 12 bytes (CPRI line rate option 6 has Control word of 10 Bytes) and (CPRI line rate option 7 has Control word of 16 Bytes).

Accordingly, the REC requests a custom line rate of:
- 12 Bytes
- 16 Words per Basic Frame (as standard CPRI)
- 64B/64B line coding (data are "only" scrambled using the CPRI scrambler, the SYNC is achieved by correlation of Hyperframe sync CW which is not scrambled). The achieved line rate is 5.898 24 GHz

A request acknowledgement from the RE is provided, and the link is configured according to the acknowledged settings. In the event that the CPRI link does not recover within a predefined period of time (provided as a parameter of the custom line rate setting form example) the RE can revert to the legacy CPRI line rate negotiation to avoid a hanging-up case.

The-present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a distributed radio base station (101) comprising a first distributed portion (105) of the radio base station, a second distributed portion (106) of the radio base station, and
a parallel communications link (103) connecting the first distributed portion (105) and the second distributed portion (106), for configuring the link, comprising:
establishing the link between the first and second distributed portions using a predefined line rate negotiated between the portions;
transmitting a request from the first distributed portion to the second distributed portion for a custom parallel communications link between the two portions;
receiving, at the first distributed portion, acknowledgement of the request for the custom parallel communications link from the second distributed portion.

2. A method as claimed in claim 1, wherein the custom parallel communications link uses a custom line rate.

3. A method as claimed in claim 1 or 2, wherein the custom parallel communications link uses a custom frame structure.

4. A method as claimed in claim 2, further comprising:
establishing the parallel communications link between the first and second distributed portions using the custom line rate.

5. A method as claimed in claim 2 or 4, further comprising:
determining whether a custom line rate for the link between the first and second distributed portion is supported.

6. A method as claimed in claim 5, wherein the line rate of the link reverts to the predefined rate in the event that a custom line rate is not supported or available.

7. A method as claimed in any of claims 2, 4 or 5, wherein the custom line rate includes a custom control word size determined on the basis of desired communications link parameters.

8. A method as claimed in any preceding claim, wherein the first distributed portion is a radio equipment controller, and the second distributed portion is radio equipment for the base station.

9. A radio equipment controller (REC) (105), configured to:
establish a parallel communications link (103) to radio equipment (RE) (106) using a predefined line rate negotiated between the REC and the RE;
transmit a request to the RE for a custom parallel communications link;
receive an acknowledgement of the request for the custom link from the RE.

10. A radio equipment controller (105) as claimed in claim 9, further operable to establish the custom parallel communications link to the RE using a custom line rate.

11. A radio equipment controller (105) as claimed in claim 9, further operable to establish the custom parallel communications link to the RE using a custom frame structure.

12. A radio equipment controller as claimed in claim 9 or 10, further operable to determine whether a custom line rate for the link to the RE is supported.

13. A parallel communications link (103) between first (105) and second (106) distributed portions of a radio base station (101), established to use a custom line rate determined on the basis of a control word size relating to desired link parameters.

14. A parallel communications link (103) between first (105) and second (106) distributed portions of a radio base station (101), established to use a custom frame structure.

15. A computer program product, comprising a computer usable medium having computer readable program code embodied therein, said computer readable program code adapted to be executed to implement a method, in a distributed radio base station comprising a first distributed portion of the radio base station, a second distributed portion of the radio base station, and
a parallel communications link connecting the first distributed portion and the second distributed portion, for configuring the link as claimed in any of claims 1 to 8.
